(19) Europäisches Patentamt
European Patent Office
Office européen des brevets

(11) Publication number: **0 416 681 A2**

# (12) EUROPEAN PATENT APPLICATION

(21) Application number: **90202214.4**

(51) Int. Cl.$^5$: **C08G 67/02**

(22) Date of filing: **15.08.90**

(30) Priority: **17.08.89 NL 8902081**

(43) Date of publication of application:
**13.03.91 Bulletin 91/11**

(84) Designated Contracting States:
**AT BE CH DE DK ES FR GB GR IT LI LU NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Petrus, Leonardus**
**Badhuisweg 3**
**NL-1031 CM Amsterdam(NL)**
Inventor: **De Smedt, Philip Jean Marie Maurice**
**Badhuisweg 3**
**NL-1031 CM Amsterdam(NL)**

(74) Representative: **Aalbers, Onno et al**
**P.O. Box 302**
**NL-2501 CH The Hague(NL)**

## (54) Copolymers of carbon monoxide and unsaturated compounds.

(57) Novel linear polymers of carbon monoxide with one or more olefinically unsaturated compounds, in which polymers the units originating in carbon monoxide on the one hand and the units originating in the applied olefinically unsaturated compounds on the other hand occur substantially in alternating order, and which have a Q higher than 3.0. Process for their preparation.

EP 0 416 681 A2

# COPOLYMERS OF CARBON MONOXIDE AND UNSATURATED COMPOUNDS

The invention relates to novel copolymers of carbon monoxide with one or more olefinically unsaturated compounds.

It is known that linear polymers of carbon monoxide with one or more olefinically unsaturated compounds, in which polymers the units originating in carbon monoxide on the one hand, and the units originating in the applied olefinically unsaturated compounds on the other hand, occur substantially in alternating order, can be prepared by contacting the monomers at elevated temperature and pressure with a suitable catalyst. When the polymerization is carried out under constant conditions of temperature, pressure and gas phase composition, polymers are obtained whose molecular weight distribution displays only a very limited width. The width of the molecular weight distribution, generally referred to as Q, is understood to be the quotient of the weight average molecular weight ($M_w$) and the number average molecular weight ($M_n$). The polymers prepared in the way described hereinbefore display a Q which may range from 2.0 to 2.3. Due to such variations in the polymerization conditions as arise when the polymerization is continued over a prolonged period and/or carried out on a technical scale, some broadening of the molecular weight distribution may be seen, when polymers are formed which have a Q that may range from 2.3 to 2.5.

As a rule, polymers of the present type, which have a relatively narrow molecular weight distribution as given by a Q of from 2.0 to 2.5, are suitable for most applications. For some applications it may nevertheless be advantageous to have available polymers with a broad molecular weight distribution, as indicated by a Q bigger than 3.0. As is known generally in the art, broadening the molecular weight distribution of thermoplastics, while keeping constant other structural factors such as the degree of branching, the average molecular weight(s) and the presence of impurities, increases the processability. For example, it is observed for typical thermoplastics such as polyethylene, polystyrene and polyisobutylene, that when Q is increased, the apparent viscosity and the flow behaviour index decrease, and the critical shear rate increases. However, it is also known that this increase in processability is accompanied by a deterioration of the mechanical properties. For instance, the impact strength, tensile strength, toughness, softening point and resistance to environmental stress cracking are lowered by a broadened molecular weight distribution (cf. J.A. Brydson, "Plastics Materials", 2nd edition, London, 1969, p. 106, p. 114).

The Applicant has done extensive research into the preparation of polymers of the present type which have a Q larger than 3.0. On the basis of the given fact that such unintentional fluctuations in the process conditions as occur when the polymerization is carried out over a prolonged period and/or on a technical scale lead to some broadening of the molecular weight distribution, attempts were at first made to achieve the desired objective by gradually changing the conditions during the polymerization between the limits within which both sufficiently high reaction rates and polymers with sufficiently high molecular weights are obtained. The initial results of this research were disappointing. It is true that by gradually raising or lowering the temperature and/or the pressure during polymerization, some broadening of the molecular weight distribution could indeed be attained, but the Q never exceeded 3.0. The same applies to gradual changes made in the gas phase composition during polymerization.

Further research has now shown that polymers of the present type having a Q higher than 3.0 can be prepared in a relatively simple manner by admixing in a suitable ratio, two or more polymers which differ sufficiently from one another in $M_w$. Polymers of the present type having a Q higher than 3.0 are novel.

The patent application therefore relates to novel linear polymers of carbon monoxide with one or more olefinically unsaturated compounds, in which polymers the units originating in carbon monoxide on the one hand, and the units originating in the applied olefinically unsaturated compounds on the other hand, occur substantially in alternating order, and which polymers have a Q higher than 3.0.

Further, the patent application relates to processes for the preparation of these polymers.

It was surprisingly found that, contrary to other thermoplastics, the present copolymers of carbon monoxide do not exhibit a worsening of the mechanical properties when the molecular weight distribution increases. Thus the present novel polymers do not only have an improved melt flow behaviour, but also an improved flexural modulus and yield stress.

Polymers according to the invention that have a Q higher than 3.5 are preferred. Preference is further given to polymers with a Q lower than 20 and in particular to polymers with a Q lower than 15. As for the $M_w$ of the polymers of the invention, preference is given to polymers having an $M_w$ smaller than 250000 and in particular to polymers having an $M_w$ smaller than 150000.

The linear alternating polymers of the invention are polymers of carbon monoxide with one or more olefinically unsaturated compounds. The olefinically unsaturated compounds may be either compounds consisting exclusively of carbon and hydrogen or compounds which, in addition to carbon and hydrogen,

contain one or more hetero-atoms. Polymers according to the invention that are preferred are polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. Further, preferred polymers according to the invention are copolymers of carbon monoxide with ethene and terpolymers of carbon monoxide with ethene and an α-olefin, in particular propene.

Depending on the difference in $M_w$ of the various mixing components, their Q's and the mixing ratio chosen, the polymers of the invention may display a monomodal or a multimodal molecular weight distribution. The terms monomodal and multimodal refer to the graphic representation of the molecular weight distribution such as can be obtained from a GPC analysis of the polymers. A molecular weight distribution is said to be monomodal if the diagram shows only one maximum. If the polymer has a multimodal molecular weight distribution, the diagram includes more than one maximum. An example of a multimodal distribution is a bimodal distribution with two maxima in the diagram.

Polymers of the invention with a bimodal molecular weight distribution may be obtained for instance when their preparation is carried out by mixing two polymers with different $M_w$'s. According as the difference in $M_w$ of the polymers is bigger, the molecular weight distribution width for each individual polymer is narrower and the mixing ratio departs less from the 1:1 ratio, the possibility that the polymers of the invention thus prepared have a bimodal molecular weight distribution increases.

The preparation of the polymers of the invention is carried out by mixing in a suitable ratio, two or more polymers whose $M_w$'s are sufficiently different. Preferably, at most three polymers with different $M_w$'s and more particularly two polymers with different $M_w$'s are mixed together. The afore-mentioned terms "sufficiently different" and "suitable ratio" may be illustrated as follows. 'When polymers with a Q of about 3 are to be prepared by mixing two polymers in a mixing ratio of about 1:1, the $M_w$'s of these polymers should differ by about a factor 4 from one another. For the preparation of polymers with a Q of about 3.5 by mixing two polymers in the said mixing ratio, the $M_w$'s of these polymers should differ by about a factor 5 from one another. According as the mixing ratios applied depart further from 1:1, the mixing components used to prepare polymers of the same Q should be polymers which differ from one another in $M_w$.

For the preparation of the polymers of the invention, the polymers may be mixed in a variety of ways. Each of these embodiments is based on the given fact that in the polymerization for the preparation of the mixing components, the polymers obtained have a higher molecular weight according as the polymerization is carried out at a lower temperature and/or a higher pressure.

A suitable manner of preparing the polymers of the invention comprises a process in which the polymers having different $M_w$'s which are to be mixed, are prepared batchwise or continuously in separate reactors and under different conditions of temperature and/or pressure, and in which the mixing of the polymers with different $M_w$'s thus prepared is carried out after their preparation.

An other suitable manner of preparing the polymers of the invention comprises a process in which the polymers having different $M_w$'s which are to be mixed, are prepared batchwise in a single reactor by carrying out the polymerization for some time under certain conditions of temperature and pressure, then changing the temperature and/or pressure and continuing the polymerization under these modified conditions and, optionally, repeating such a change in polymerization conditions followed by polymerization once or several times, the mixing of the polymers with different $M_w$'s thus prepared being carried out inside the reactor in the course of the preparation.

Finally, an other suitable manner of preparing the polymers of the invention comprises a process in which the polymers having different $M_w$'s which are to be mixed, are prepared continuously in two or more series-connected reactors by carrying out the polymerization at temperature and/or pressure conditions which are different in each of these reactors, with the mixing of the polymers with different $M_w$'s thus prepared being carried out in the course of the preparation, in the second and any following reactor(s).

The preparation of the polymers which are suitable for use as mixing components for the polymers of the invention takes place by contacting the monomers at elevated temperature and pressure with a suitable catalyst. The polymerization is preferably carried out in the presence of a diluent in which the polymers are insoluble or virtually insoluble. Preferred diluents are lower aliphatic alcohols such as methanol. Catalysts that are suitable for the present purpose are, among others, catalysts which include a Group VIII metal. In the present patent application, Group VIII metals should be taken to be the noble metals ruthenium, rhodium, palladium, osmium, iridium and platinum, and the iron group metals iron, cobalt and nickel. Preference is given to catalysts which include palladium, nickel or cobalt as the Group VIII metal. Special preference is given to palladium as Group VIII metal. If the catalysts include a Group VIII metal, the latter is preferably taken up in the form of a salt of a carboxylic acid, in particular in the form of an acetate. In addition to a Group VIII metal, the catalysts preferably include a bidentate ligand which can form a complex

with the Group VIII metal via two phosphorus-containing, nitrogen-containing or sulphur-containing dentate groups that are present in the bidentate ligand. If a nitrogen bidentate ligand is used, preference is given to compounds of the general formula

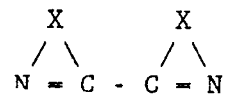

wherein X represents an organic bridging group with three or four atoms in the bridge at least two of which are carbon atoms, such as 2,2′-bipyridine and 1,10-phenanthroline. If a sulphur bidentate ligand is used, preference is given to a compound of the general formula $R^1S\text{-}R\text{-}SR^1$ in which $R^1$ is an optionally polar-substituted hydrocarbon group and R is a bivalent organic bridging group containing at least two carbon atoms in the bridge, such as 1,2-bis(ethylthio)ethane and cis-1,2-bis(benzylthio)ethene. It is preferred to use phosphorus bidentate ligands of the general formula $(R^1)_2P\text{-}R\text{-}P(R^1)_2$, wherein R and $R^1$ have the meanings given hereinbefore. Preference is further given to the use of such phosphorus bidentate ligands in which $R^1$ represents an aromatic hydrocarbon group bearing at least one alkoxy substituent ortho to the phosphorus atom to which it is bound. A very suitable compound for the present purpose is 1,3-bis[bis(2-methoxyphenyl)phosphino]propane. If a nitrogen or sulphur bidentate ligand is used in the catalysts, the amount used is preferably 0.5-100 and in particular 1-50 mol per mol of Group VIII metal. When a phosphorus bidentate ligand is used, the amount used is preferably 0.5-2 and in particular 0.75-1.5 mol per mol of Group VIII metal. In addition to a Group VIII metal and a phosphorus, nitrogen or sulphur bidentate ligand, the catalysts preferably include an anion of an acid with a pKa of less than 4 and in particular an anion of an acid with a pka of less than 2. Examples of suitable acids with a pKa of less than 2 are sulphonic acids, such as para-toluenesulphonic acid, and halogen carboxylic acids, such as trifluoroacetic acid. The anion of an acid with a pKa of less than 4 can be combined with the catalysts in the form of an acid and/or in the form of a salt, such as a cupric or a nickel salt. The anion is preferably present in the catalysts in a quantity of 1-100 and in particular 2-50 mol per mol of Group VIII metal. The anion of an acid with a pKa of less than 4 may be used as individual component, but it may also be present in the catalysts because palladium trifluoroacetate or palladium para-tosylate, for instance, has been used as the Group VIII metal compound. In order to enhance the activity of the Group VIII metal-containing catalysts, a 1,4-quinone may be included therein. For this purpose, 1,4-benzoquinone and 1,4-naphthoquinone are very suitable. The applied quantity of 1,4-quinone is preferably 5-5000 and in particular 10-1000 mol per mol of Group VIII metal.

The quantity of catalyst employed in the polymerization may vary within wide limits. When a Group VIII metal-containing catalyst is employed, it is preferred to use such a quantity of catalyst composition as to comprise $10^{-7}$-$10^{-3}$ and in particular $10^{-6}$-$10^{-4}$ mol of Group VIII metal per mol of olefinically unsaturated compound to be polymerized.

The polymerization is preferably carried out at a temperature of 25-150 °C and a pressure of 2-150 bar and in particular at a temperature of 30-130 °C and a pressure of 5-100 bar. The molar ratio of olefinically unsaturated compounds relative to carbon monoxide is preferably 10:1-1:10 and in particular 5:1-1:5.

The invention will now be illustrated with the aid of the following examples.

Example 1

A carbon monoxide/ethene copolymer was prepared as follows. A stirred autoclave with a volume of 100 l was charged with 30 kg of methanol. The contents of the reactor were heated to 90 °C and during heating, a 1:1 carbon monoxide/ethene mixture was blown in. When the final temperature was reached, the pressure was 50 bar. Subsequently, polymerization was started by pumping in 127 ml of catalyst solution, which per l of acetone, comprised lg of palladium acetate, 5.1 g of trifluoroacetic acid and 2.4 g of 1,3-bis-[bis(2-methoxyphenyl)phosphino]propane. In the course of polymerization, the reactor was kept at a pressure of 50 bar by the introduction of a 1:1 carbon monoxide/ethene mixture. After 9 hours, polymerization was terminated by releasing the pressure and cooling to room temperature. The polymer was filtered off, washed with methanol and dried. The yield was 4.3 kg of copolymer with an $M_w$ of 44000 and a Q of 2.1.

Example 2

A carbon monoxide/ethene copolymer was prepared substantially in the same way as the copolymer of Example 1, except for the following differences

a) the reaction pressure was 10 bar instead of 50 bar, and

b) the reaction time was 48 hours instead of 9 hours. The yield was 4.0 kg of copolymer with an $M_w$ of 9000 and a Q of 2.3.

Example 3

A oarbon monoxide/ethene copolymer was prepared substantially in the same way as the copolymer of Example 1, except for the following differences

a) the reaction temperature was 75° C instead of 90° C, and

b) reaction time was 20 hours instead of 9 hours. The yield was 4.3 kg of polymer with an $M_w$ of 120000 and a Q of 2.2.

Example 4

A carbon monoxide/ethene/propene terpolymer was prepared as follows. A stirred autoclave with a volume of 100 l was charged with 40 kg of methanol and 4.8 kg of propene. After the contents of the reactor had been heated to 79° C, ethene was blown in until a pressure of 27 bar was reached, followed by carbon monoxide until a pressure of 52 bar was reached. Subsequently, polymerization was started by pumping in 127 ml of a catalyst solution of a composition as stated in Example 1. Together with the catalyst solution being pumped in, a start was made with the pumping in of carbon monoxide at a rate of 250 Nl/hour, ethene at a rate of 200 Nl/hour and propene at a rate of 0.1 kg/hour. During polymerization, the pressure was kept at 52 bar by releasing excess feed gas. The gas phase composition remained substantially constant during the polymerization. After 26 hours, polymerization was terminated by releasing the pressure and cooling to room temperature. The polymer was filtered off, washed with methanol and dried. The yield was 10.4 kg of terpolymer with an $M_w$ of 37000 and a Q of 2.2.

Example 5

A carbon monoxide/ethene copolymer was prepared substantially in the same way as the copolymer of Example 1, except for the following differences

a) during polymerization, no feed gases were fed into the reactor, so that pressure fell to 20 bar, and

b) the reaction time was 7 hours instead of 9 hours. The yield was 2.3 kg of terpolymer with an $M_w$ of 33000 and a Q of 2.3.

Example 6

A carbon monoxide/ethene copolymer was prepared substantially in the same way as the copolymer of Example 1, except for the following differences

a) during polymerization, no feed gases were fed into the reactor, so that pressure fell to 10 bar, and

b) the reaction time was 12 hours instead of 9 hours. The yield was 3.1 kg of copolymer with an Mw of 27000 and a Q of 2.5.

Example 7

A carbon monoxide/ethene copolymer was prepared as follows. A stirred autoclave with a volume of 1 l was charged with 400 g of methanol. The contents of the reactor were heated to 90° C and during heating, a 1:1 carbon monoxide/ethene mixture was introduced. When the final temperature was reached, the pressure was bar. Subsequently, polymerization was started by pumping in 1.7 ml of a catalyst solution of the composition stated in Example 1. In the course of polymerization, the pressure was increased linearly with time, until a final pressure of 100 bar was reached. This increase in pressure was effected by blowing in a 1:1 carbon monoxide/ethene mixture. After 8 hours, polymerization was terminated by releasing the

pressure and cooling to room temperature. The polymer was filtered off, washed with methanol and dried. The yield was 80 g of copolymer with an $M_w$ of 63000 and a Q of 2.3.

Example 8

A carbon monoxide/ethene copolymer was prepared substantially in the same way as the copolymer of Example 1, except for the following differences

a) during polymerization, the temperature was increased linearly with time, from a starting temperature of 75 °C to a final temperature of 90 °C, and

b) the reaction time was 12 hours instead of 9 hours.

The yield was 3.7 kg of copolymer with an Mw of 68000 and a Q of 2.4.

Example 9

A carbon monoxide/ethene copolymer was prepared substantially in the same way as the copolymer of Example 1, except for the following differences

a) during polymerization, the temperature was increased linearly with time, from a starting temperature of 75 °C to a final temperature of 90 °C, and

b) during polymerization, the pressure decreased linearly with time, from a starting pressure of 50 bar to a final pressure of 15 bar, and

c) the reaction time was 20 hours instead of 9 hours.

The yield was 4.4 kg of copolymer with an $M_w$ of 57000 and a Q of 2.8.

Example 10

A carbon monoxide/ethene copolymer was prepared substantially in the same way as the copolymer of Example 1, except for the following differences

a) after the contents of the reactor were heated to 90 °C, ethene was forced in until a pressure of 34 bar was reached, followed by carbon monoxide until a pressure of 50 bar was reached,

b) during polymerization, carbon monoxide was forced in, so that the pressure was kept constant at 50 bar, and

c) the reaction time was 6 hours instead of 9 hours.

The yield was 3.6 kg of copolymer with an $M_w$ of 38000 and a Q of 2.2.

Example 11

A carbon monoxide/ethene copolymer was prepared by mixing 1 kg of the copolymer prepared in accordance with Example 1 with 1 kg of the copolymer prepared in accordance with Example 2. The copolymer thus obtained had an $M_w$ of 27000 and a Q of 3.7.

Example 12

A carbon monoxide/ethene copolymer was prepared by mixing 1.8 kg of the copolymer prepared in accordance with Example 1 with 0.2 kg of the copolymer prepared in accordance with Example 2. The copolymer thus obtained had an $M_w$ of 39000 and a Q of 2.6.

Example 13

A carbon monoxide/ethene copolymer was prepared as follows. A stirred autoclave with a volume of 100 l was charged with 30 kg of methanol. After the contents of the reactor had been heated to 75 °C, ethene was forced in until a pressure of 25 bar was reached, followed by carbon monoxide until a pressure of 50 bar was reached. Subsequently, polymerization was started by pumping in 127 ml of a catalyst

solution of a composition as stated in Example 1. Together with the catalyst solution being pumped in, a start was made on the pumping in of carbon monoxide at a rate of 250 Nl/hour. During polymerization, the pressure was kept at 50 bar by releasing excess feed gas. After 7 hours, a period of 30 minutes was taken to both heat the reactor contents to 90 °C and gradually release the pressure to 15 bar. After 20 hours, polymerization was terminated. The yield was 4.9 g of copolymer with an $M_w$ of 59000 and a Q of 4.3.

Example 14

A carbon monoxide/ethene/propene terpolymer was prepared in a continuous process in two series-connected reactors, with the reaction product from the first reactor together with fresh feed components being fed continuously to the second reactor. The catalyst solution used had a composition as stated in Example 1. The reaction conditions prevailing in both reactors as well as the obtained results are listed in Table I.

TABLE I

| | |
|---|---|
| First reactor | |
| Reactor volume, l | 100 |
| Feed rates | |
| methanol, kg/hour | 4.0 |
| carbon monoxide, Nl/hour | 217 |
| ethene, Nl/hour | 239 |
| propene, kg/hour | 0.31 |
| catalyst solution, ml/hour | 42 |
| Pressure, bar | 50 |
| Temperature, °C | 72 |
| Quantity by weight of suspension present in the reactor, kg | 40 |
| Suspension concentration, % | 8.2 |
| Second reactor | |
| Reactor volume, l | 150 |
| Feed rates | |
| carbon monoxide, Nl/hour | 267 |
| ethene, Nl/hour | 158 |
| Pressure, bar | 20 |
| Temperature, °C | 90 |
| Quantity by weight of suspension present in the reactor, kg | 40 |
| Suspension concentration, % | 16.5 |
| Quantity of polymer produced, g/hour | 790 |
| $M_w$ | 38000 |
| Q | 4.5 |

Of Examples 1-14, Examples 11, 13 and 14 are examples in accordance with the invention. In these examples, two polymers were mixed to prepare polymers according to the invention having a Q higher than 3.0.

Example 11 relates to the preparation of a carbon monoxide/ethene copolymer with a Q of 3.7, by mixing in a weight ratio of 1:1 two copolymers which had been produced in separate batch preparations, viz.

a) a copolymer with an $M_w$ of 44000 and prepared at a pressure of 50 bar, and

b) a copolymer with an $M_w$ of 9000 and prepared at a pressure of bar.

Example 13 relates to the preparation of a carbon monoxide/ethene copolymer with a Q of 4.3, by mixing two copolymers which had been jointly produced in a single batch preparation, viz.

a) a copolymer with a relatively high $M_w$ and prepared at a temperature of 75 °C and a pressure of 50 bar, and

b) a copolymer with a relatively low $M_w$ and prepared at a temperature of 90 °C and a pressure of 15 bar.

Example 14 relates to the preparation of a carbon monoxide/ethene/propene terpolymer with a Q of 4.5, by mixing two terpolymers which had been jointly produced in a single continuous preparation carried out in two series-connected reactors, viz.

a) a terpolymer with a relatively high $M_w$ and prepared in the first reactor at a temperature of 72 °C and a pressure of bar, and

b) a terpolymer with a relatively low $M_w$ and prepared in the second reactor at a temperature of 90 °C and a pressure of bar.

Examples 1-10 and 12 fall outside the scope of the invention and have been included in the patent application for comparison.

Examples 1-4 relate to conventional copolymer and terpolymer preparations at constant temperatures and pressures in which polymers were obtained which had Q's ranging from 2.1 to 2.3.

In Examples 5-7, attempts were made to prepare polymers with a Q higher than 3.0 by gradually changing the pressure in the course of the polymerization. Comparison of the results of Examples 5 and 6 with that of Example 1 shows that a decrease in pressure of from 50 to 20 or 10 bar results in Q increases of no more than from 2.1 to 2.3 and 2.5, respectively. Even an increase in pressure of from to 100 bar, as was applied in Example 7, led to a polymer having a Q of no more than 2.3.

In Examples 8 and 9, attempts were made to prepare polymers with a Q higher than 3.0 by gradually raising the temperature in the course of the polymerization. In Example 9, the pressure was also gradually decreased. Comparison of the results of Examples 8 and 9 with that of Example 3 shows that a rise in temperature of from 75 to 90 °C, optionally together with a decrease in pressure of from 50 to 15 bar, only results in Q increases of from 2.2 to 2.4 and 2.8, respectively.

In Example 10, attempts were made to prepare a polymer with a Q higher than 3.0 by gradually changing the gas phase composition in the course of the polymerization. Comparison of the results of Examples 1 and 10 shows that this arrangement only results in an increase of the Q of from 2.1 to 2.2.

In Example 12, attempts were made to prepare a polymer with a Q higher than 3.0 by mixing two polymers. Although the $M_w$'s of the two polymers differed from one another by no more than a factor 4, the objective aimed at was not reached; the polymer obtained had a Q of no more than 2.6. This was due to the fact that a mixing ratio of 1:9 was chosen, which departed too far from the mixing ratio of 1:1, the ratio that yields the highest Q.

With the aid of $^{13}C$-NMR analysis it was established that the carbon monoxide/ethene copolymers prepared by Examples 1-3 and 5-13 and the carbon monoxide/ethene/propene terpolymers prepared by Examples 4 and 14 were made up of linear chains, in which the units originating in carbon monoxide on the one hand and the units originating in ethene and propene, respectively, on the other hand, occurred in alternating order. Within the carbon monoxide/ethene/propene terpolymer chains, the units originating in ethene and propene occurred randomly distributed.

## Claims

1. Novel linear polymers of carbon monoxide with one or more olefinically unsaturated compounds, in which polymers the units originating in carbon monoxide on the one hand and the units originating in the applied olefinically unsaturated compounds on the other hand occur substantially in alternating order, characterized in that they have a Q higher than 3.0.

2. Polymers as claimed in claim 1, characterized in that they have a Q higher than 3.5.

3. Polymers as claimed in claim 1 or 2, characterized in that they have a Q lower than 20.

4. Polymers as claimed in one or more of claims 1-3, characterized in that they have an $M_w$ lower than 250000.

5. Polymers as claimed in one or more of claims 1-4, characterized in that they are polymers of carbon monoxide with one or more olefinically unsaturated hydrocarbons, such as copolymers of carbon monoxide with ethene or terpolymers of carbon monoxide with ethene and an $\alpha$-olefin, such as propene.

6. Polymers as claimed in one or more of claims 1-5, characterized in that they have a multimodal molecular weight distribution.

7. Process for the preparation of polymers as claimed in one or more of claims 1-6, characterized in that two or more polymers whose $M_w$'s are sufficiently different are mixed in a suitable ratio.

8. Process as claimed in claim 7, characterized in that the polymers having different $M_w$'s which are to be mixed, are prepared batchwise or continuously in separate reactors and under different conditions of temperature and/or pressure, and in that the mixing of the polymers with different $M_w$'s thus prepared is effected after their preparation.

9. Process as claimed in claim 17, characterized in that the polymers having different $M_w$'s which are to be mixed are prepared batchwise in a single reactor by carrying out the polymerization for some time under certain conditions of temperature and pressure, then changing the temperature and/or pressure and continuing the polymerization under the changed conditions, and optionally repeating such a change in polymerization conditions followed by polymerization once or several times, the mixing of the polymers with different $M_w$'s thus prepared being carried out inside the reactor in the course of the preparation.

10. Process as claimed in claim 7, characterized in that the polymers having different $M_w$'s which are to be mixed, are prepared continuously in two or more series-connected reactors by carrying out the polymerization under temperature and/or pressure conditions which are different in each of these reactors, with the mixing of the polymers with different $M_w$'s thus prepared being carried out in the second and any following reactor(s) in the course of the preparation.

11. Process as claimed in one or more of claims 7-10, characterized in that the linear alternating polymers with different $M_w$'s which are mixed, are obtained by contacting the monomers at elevated temperature and pressure with a suitable catalyst.

12. Process as claimed in claim 11, characterized in that the catalyst comprises a Group VIII metal.

13. Process as claimed in claim 12, characterized in that, in addition to a Group VIII metal, the catalyst comprises a bidentate ligand which can form a complex with the Group VIII metal via two phosphorus-containing, nitrogen-containing or sulphur-containing dentate groups that are present in the bidentate ligand.